# EUROPEAN PATENT SPECIFICATION

(11) **EP 4 326 082 B1**
(45) Date of publication and mention of the grant of the patent: **04.06.2025**
(21) Application number: 22723278.2
(22) Date of filing: 19.04.2022
(51) Int. Cl.: A23G 3/34, A23G 3/26, A23G 3/48, A23G 3/54, A23G 4/06, A23G 4/20, A23L 25/00

(54) **METHOD FOR COATING CONFECTIONERY PRODUCT**
VERFAHREN ZUR BESCHICHTUNG VON SÜSSWAREN
PROCÉDÉ D'ENROBAGE DE PRODUIT DE CONFISERIE

(30) Priority: 21.04.2021 US 202163177480 P
(43) Date of publication of application: 28.02.2024
(73) Proprietor: Intercontinental Great Brands LLC, East Hanover, NJ 07936 (US)
(72) Inventor: WAXMAN, Sarah, East Hanover, New Jersey 07936 (US); CAPANO, Alexa B., East Hanover, New Jersey 07936 (US)
(74) Representative: Boult Wade Tennant LLP
(86) International application number: PCT/US2022/025358
(87) International publication number: WO 2022/225935

(56) References cited:
- WO-A1-2006/028450
- WO-A1-2015/051056
- US-A- 5 424 085

## Description

### CROSS REFERENCE TO RELATED APPLICATIONS

This application claims the benefit of U.S. Application No. 63/177,480 filed on April 21, 2021.

### FIELD

The subject matter disclosed herein relates generally to the field of confectionery products, and specifically to a method for coating of confectionery products with a plant based particulate.

### BACKGROUND

Coatings are included on confectionery compositions for a variety of purposes including providing a color or texture, for providing a flavor, for protection of the core, and the like.

Coatings can be prepared as smooth, uniform layers such as hard panned coatings or soft coatings. Other known coatings include particulate coatings such as the coatings on so-called "sanded" products, for example the particulate sugar coating on traditional gum drops.

There are known methods of adhering particulate ingredients to the surface of confectionery. Some approaches for adhering particulates to the surface of confectionery include the use of a saccharide syrup, a sugar polyol syrup, or a gum arabic solution as a binder. An alternate approach is to heat the surface of the confectionery to soften the surface prior to applying the particulate ingredients.

WO 2006/028450 Al discloses a process for producing a coated comestible comprising: a) placing a batch of comestible cores in a coating drum; b) applying one or more coating syrups in multiple aliquots, with drying between applications, to build up a coating on the cores; and c) adding a quantity of particulates to the cores in the coating drum before the last applied aliquot of coating syrup has dried, such that the particulates are uniformly applied across the length of the bed and stick to the coating on the cores. The particulates comprise powdered caffeine. The confectionery is selected from the group consisting of pressed tablets and chewing gum.

### BRIEF SUMMARY

The present invention is defined in the appended claims. According to an embodiment, a method of coating a confectionery core is provided. The method comprises:
forming the confectionery core from a suitable confectionery composition including an edible product comprising a sweet component, a savoury component, a salty component, a sour component, a bitter component, or a combination thereof;
applying a first coating material to the confectionery core, the first coating material being in liquid form is a syrup;
tackifying said first coating material on the confectionery core for a selected period of time to achieve a specific level of tackiness for said first coating material; and
applying a second coating material to said first coating material on the confectionery core, said second coating material including a natural plant based particulate, wherein said specific level of tackiness correlates with a desired surface coverage percentage of said second coating material relative to a surface area of the confectionery core, wherein said first coating material adheres said second coating material to said confectionery core to produce a coated confectionery product, and wherein the method further comprises:
   applying a second layer of said first coating material to said coated confectionery product;
   tackifying said second layer of said first coating material on said coated confectionery product for a second selected period of time to achieve a second specific level of tackiness for said second layer of said first coating material; and
   applying a second layer of said second coating material to said second layer of said first coating material on said coated confectionery product, said second layer of said first coating material adheres said second layer of the second coating material to said coated confectionery product.

In addition to one or more of the features described herein, further embodiments may include that said tackifying said first coating material for said selected period of time to achieve said specific level of tackiness for said first coating material further includes partially drying said first coating material for all or at least a portion of said selected period of time to achieve said specific level of tackiness for said first coating material.

In addition to one or more of the features described herein, further embodiments may include applying a heated airflow to said first coating material on the confectionery core to partially dry said first coating material on the confectionery core.

In addition to one or more of the features described herein, further embodiments may include that said tackifying said first coating material for said selected period of time to achieve said specific level of tackiness for said first coating material further includes partially cooling said first coating material for all or at least a portion of said selected period of time to achieve said specific level of tackiness for said first coating material.

In addition to one or more of the features described herein, further embodiments may include applying a non-heated airflow to said first coating material on the confectionery core to partially cool said first coating material on the confectionery core.

In addition to one or more of the features described herein, further embodiments may include that said tackifying said first coating material for said selected period of time to achieve said specific level of tackiness for said first coating material further includes allowing said first coating material to crystallize for all or at least a portion of said selected period of time to achieve said specific level of tackiness for said first coating material.

In addition to one or more of the features described herein, further embodiments may include that said natural plant based particulate is at least one of a fruit, a fruit powder, nuts, coffee, vegetable powder, spice particulates, or herb particulates.

In addition to one or more of the features described herein, further embodiments may include that said first coating material includes at least one of a natural syrup with naturally occurring sugar, an artificial syrup, naturally occurring sugar, an artificial sugar, a sugar alcohol, water, a fat based material, chocolate, or a compound chocolate.

In addition to one or more of the features described herein, further embodiments may include that said confectionery core is a chewing gum, a nut, a cluster of nuts, a grain, a cluster of grains, a seed, or a cluster of seeds.

In addition to one or more of the features described herein, further embodiments may include feeding the confectionery core into a drum. The first coating material is applied to the confectionery core in said drum.

In addition to one or more of the features described herein, further embodiments may include rotating said drum about a central drum axis to aid in applying said first coating material to the confectionery core by evenly distributing said first coating material around the confectionery core.

In addition to one or more of the features described herein, further embodiments may include rotating said drum about a central drum axis to aid in tackifying said first coating material.

Said first coating material adheres said second coating material to said confectionery core to produce a coated confectionery product. The method includes applying a second layer of said first coating material to said coated confectionery product. The method also includes tackifying said second layer of said first coating material on said coated confectionery product for a second selected period of time to achieve a second specific level of tackiness for said second layer of said first coating material. The method includes applying a second layer of said second coating material to said second layer of said first coating material on said coated confectionery product, said second layer of said first coating material adheres said second layer of the second coating material to said coated confectionery product.

In addition to one or more of the features described herein, further embodiments may include that said second coating material overlaps said first coating material.

Said specific level of tackiness correlates with a desired surface coverage percentage of said second coating material relative to a surface area of the confectionery core.

In addition to one or more of the features described herein, further embodiments may include that said desired surface coverage percentage is greater than 50% of said surface area of the confectionery core.

According to another embodiment, not part of the present invention, a coated confectionery product is provided.
The coated confectionery produce includes a confectionery core, a first coating material at least partially surrounding said confectionery core, and a second coating material at least partially surrounding said confectionery core and said first coating material. The second coating material includes a natural plant based particulate.

In addition to one or more of the features described herein, further embodiments may include that said natural plant based particulate is at least one of a fruit, a fruit powder, nuts, coffee, vegetable powder, spice particulates, or herb particulates.

In addition to one or more of the features described herein, further embodiments may include that said first coating material includes at least one of a natural syrup with naturally occurring sugar, an artificial syrup, naturally occurring sugar, an artificial sugar, a sugar alcohol, water, a fat based material, chocolate, or a compound chocolate.

In addition to one or more of the features described herein, further embodiments may include that said confectionery core is a chewing gum, a nut, a cluster of nuts, a grain, a cluster of grains, a seed, or a cluster of seeds.

Technical effects of embodiments of the present disclosure include coating a confectionery core using a first coating material that has been allowed to be evenly distributed and tacky (e.g., partially dry and/or crystallize) for a selected period of time and adhering a second coating material with a natural plant based particulate to the first coating material.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The present disclosure is illustrated by way of example and not limited in the accompanying figures in which like reference numerals indicate similar elements.
FIG. 1 is a schematic illustration of a coated confectionery product, in accordance with an embodiment of the disclosure;
FIG. 2 illustrates a drum for coating a confectionery core, with a coating formed via one or more layers of a first coating material and a second coating material, in accordance with an embodiment of the disclosure; and
FIG. 3 is a flow chart of a method of coating the confectionery core, in accordance with an embodiment of the disclosure.

### DETAILED DESCRIPTION

Disclosed herein are coated confectionery products 100 that are composed of a confectionery core 110 and a coating 114 formed via one or more layers of a first coating material 120 and a second coating material 130. The confectionery core 110 is formed from a suitable confectionery composition. The term "confectionery composition" as used herein is intended to include any edible product comprising a sweet component, a savory component, a salty component, a sour component, a bitter component, or a combination thereof. Confectionery compositions may additionally include medicinal preparations made with sugar, syrup, sugar alcohol, honey, and sweet foods, such as candy or pastry for example. Confectionery compositions are well known in the art and include soft candy, chewy candy, hard candy, chewing gum, chocolate (including milk chocolate, dark chocolate, white chocolate, and semi-sweet chocolate for example, and lozenges, etc. Examples of the confectionery core 110 include but are not limited to a chewing gum, a nut, a cluster of nuts, a grain, a cluster of grains, a seed, or a cluster of seeds. In one embodiment, the confectionery core 110 is a chewing gum composition.

In the present invention, particularly embodiments including where the confectionery core 110 is a chewing gum, the first coating material 120 in liquid form is a syrup. In an embodiment, the syrup includes a fat based material, such as chocolate or compound chocolate material. Alternatively, or in addition, the syrup may be one or a combination of a natural syrup with naturally occurring sugar, an artificial syrup, a naturally occurring sugar, an artificial sugar, a sugar alcohol and/or water, and in some embodiments may further include at least one of a binding agent and an emulsifier. One or more suitable binding agents may be any selected based on the desired properties of the first coating material 120 or the coating 114. Examples of suitable binding agents include gum arabic, pea starch, xanthan gum, carboxymethyl cellulose, methyl cellulose, hydroxypropylmethyl cellulose, starch, modified starches, inulin, konjac, chitosan, tragacanth, karaya, ghatti, larch, carageenan, alginate, chemically modified alginate, agar, guar, locust bean, psyllium, tara, gellan, curdlan, pullan, gelatin, pectin, and combinations thereof for example.

Similarly, the emulsifiers optionally used in the first coating material 120. can be suitably chosen based on the desired properties of the solution. Suitable emulsifiers include polysorbates (polyoxyethylene sorbitan esters), glyceryl monostearate, lecithin, a fatty acid monoglyceride, a diglyceride, propylene glycol monostearate, sugar esters, polyglycerol fatty acid esters, polyglycerol polyricinoleate (PGPR), monoglycerides and combinations thereof. Suitable polysorbates include polysorbate 20, polysorbate 40, polysorbate 60, and polysorbate 80. In some embodiments, the emulsifier used is polysorbate 60.

The coating 114 formed about the exterior of the confectionery core 110 additionally includes a second coating material 130 that may be dry. The second coating material 130 includes one or more types of natural plant based particulates. The plant based particulate may include insoluble plant material or partially insoluble plant material. In an embodiment, this insoluble plant based particulate or partially insoluble plant based particulate may be applied to the confectionery core 110 and the first coating material 120 through panning.

The second coating material 130 is composed of a dry material that is or includes a natural plant based particulate. Natural plant based particulates may include but are not limited to, fruit, fruit powder, nuts, coffee, vegetable powder, spice particulates, herb particulates, or any other naturally derived product known to one of skill in the art. The natural plant based particulate can be ground (i.e., powder, whole pieces, or some in between fragment size. An average granular size of the dry material may depend on various factors, including, but not limited to, the composition of the first coating material 120 and the size of the confectionery core 110. In an embodiment, the average granular size of the dry material is smaller than a size of the confectionery core 110 so that the dry material may stick to the confectionery core 110. In an embodiment, the average granular size of the dry material is less than about 30% of the size of the confectionery core 110, such as less than about 20%, less than about 10%, and less than about 5% of the size of the confectionery core 110. In an embodiment, an average granular size of the dry material is less than about 1% of the size of the confectionery core 110.

The average granular size / size of the confectionery core 110 or the second coating material 130 may be measured by measuring a diameter of the confectionery core 110 or the second coating material 130. If the confectionery core 110 or the second coating material 130 is not perfectly spherical in shape, the diameter may be an average diameter or a largest dimension. In one example, the largest dimension may be measured by passing through a sieve.

In an embodiment, the average size of the confectionery core 110, may be between about 0.079-0.28in (2-7mm) and the second coating material 130 has an average granular size less than or equal to about 0.024in (0.6mm). In an embodiment, the confectionery core 110 may be candy or gum having an average size of about 0.39in (10 mm).

In an embodiment, the second coating material 130 may be composed of coffee grounds having an average granular size between about 0.0091-0.014in (0.23-0.35mm). In another embodiment, the second coating material 130 may be composed of a strawberry powder having an average granular size of less than or equal to about 0.0167in (0.425mm).

Natural plant based particulates have not previously been used in a coating 114 in alternating additions because it is difficult to apply the natural plant based particulate while maintaining the desired features and finish of the coated confectionery product 100. For example, if a dry coating material containing a natural plant based particulate coating, such as the second coating material 130, is added to a confectionery core 110 prior to a liquid coating material, such as the first coating material 120, the dry coating material containing the natural plant based particulate will not adhere to the confectionery core 110 because the natural plant based particulate will clump with the liquid coating of the first coating material 120 instead of being evenly distributed about the exterior of the confectionery core 110. Further, if the natural plant based particulate is integrated into a liquid coating material used to coat the confectionery core 110, such as the first coating material 120 for example, the viscosity of the liquid coating material is increased. As a result of the increased viscosity, the distribution of the liquid coating material and any additional coating material applied thereto is altered, thereby preventing a smooth finish of the coating around the confectionery core 110.

With reference to the coating 114, one or more layers of the first coating material 120 at least partially surrounds the confectionery core 110. In an embodiment, the first coating material 120 fully surrounds the entire confectionery core 110. One or more layers of the second coating material 130 at least partially surrounds the first coating material 120. In an embodiment, the second coating material 130 fully surrounds or encapsulates the first coating material 120 and the confectionery core 110.

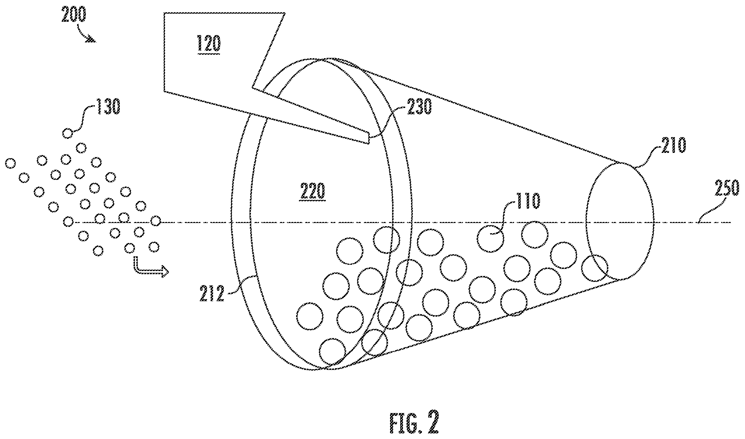

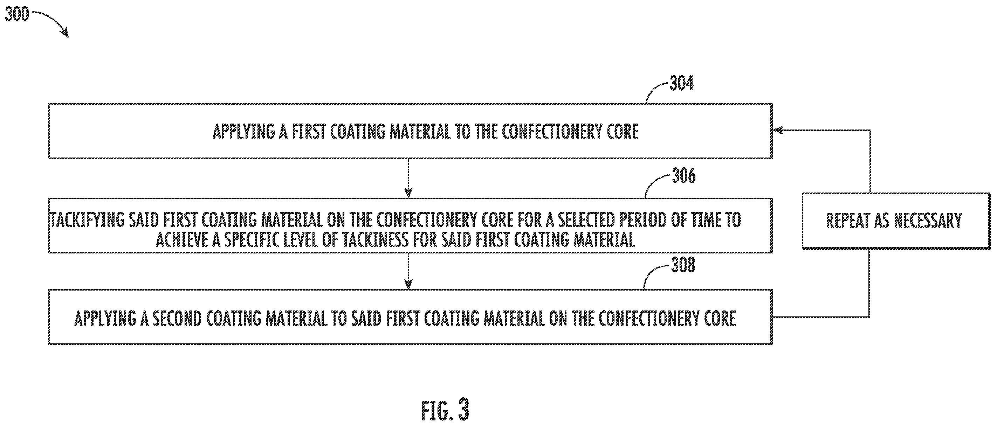

With reference now to FIGS. 2 and 3, a system and method 300 of forming a coated confectionery product 100 where the coating 114 includes a natural plant based particulate and has one or more desired finish characteristics is illustrated and described in more detail. To effectively adhere a second coating material 130 including a natural plant based particulate to a confectionery core 110 using a first coating material 120, the first coating material 120 in liquid form is first applied to the exterior surface of the confectionery core 110. The confectionery core 110 may need to be preconditioned depending on a material of the confectionery core 110. In one example, confectionery cores 110 composed of nuts or similar materials may not need to be preconditioned. In another example, confectionery cores 110 composed of chewing gum or similar materials may need to be preconditioned. The preconditioning of the confectionery core 110 may include, but is not limited to, heating the confectionery core 110 or cooling confectionery core 110. For example, the confectionery core 110 may be cooled, such as to a temperature between about -10°C and 10°C for example, prior to processing and application of the first coating material 120.

After application of one or more layers of the first coating material 120, the first coating material 120 is allowed to tackify, which will allow the second coating material 130 to stick to the first coating material 120 to achieve desired surface coverage percentage. As used herein, the term "tackify" is intended to describe a process during which a surface becomes tacky or sticky. Further, the process by which the first coating material 120 is allowed to tackify (also referred to herein as "tackifying") may include partially drying, partially cooling, and/or allowing to crystallize to achieve a specific level of tackiness for the first coating material 120. The desired surface coverage percentage may be associated with a single application of the second coating material 130 to the first coating material 120. In an embodiment, the desired surface coverage percentage is relative to the surface area of the confectionery core 110 because the first coating material 120 should already cover 100% of the surface area of the confectionery core 110 when the second coating material 130 is applied. In an embodiment, the desired surface coverage percentage is equal to or greater than about 50% of the surface area of the confectionery core 110, such as greater than about 60%, about 70%, about 80%, about 90%, or about 95% of the surface area of the confectionery core 110. In an embodiment, the desired surface coverage percentage is equal to about 100% of the surface area of the confectionery core 110.

A specific level of tackiness of the first coating material 120 may correlate with the desired surface coverage percentage of the second coating material 130 relative to a surface area of the confectionery core 110. For example, as the level of tackiness of the first coating material 120 increase, the likelihood that the second coating material 130 will stick to the first coating material 120 similarly increases. Additionally, a specific level of tackiness may be required to achieve the desired surface coverage percentage. The specific level of tackiness may be dependent upon one or more of the type of the first coating material 120, the type of the second coating material 130, and the size of the second coating material 130 relative to the confectionery core 110. The percent coverage of the second coating material 130 on the first coating material 130 may be dependent on the specific level of tackiness and the quantity of the second coating material 130. For example, natural plant based particulate within the second coating material 130 may stick to the first coating material 120 including a sugar syrup having a first level of tackiness and the same natural plant based particulate may stick to a first coating material 120 including chocolate having a second level of tackiness, the first level and the second level of tackiness being different. In another example, larger natural plant based particulates within the second coating material 130 may require a first coating material 120 having a greater level of tackiness than smaller natural plant based particulates to stick to the first coating material 120.

In order to allow the first coating material 120 to tackify, the first coating material 120 may be partially dried, partially cooled, or allowed to crystallize around the confectionery core 110 for a selected time period. The selected time period may vary depending on at least one of the first coating material 120 and the second coating material 130 utilized.

In an embodiment, the tackifying of the first coating material 120 on the confectionery core 110 may be facilitated by application of a fluid flow, such as air for example, configured to flow over the first coating material 120 or the confectionery core 110. The airflow may be a heated airflow or a non-heated airflow. For example, if the first coating material 120 requires moisture removal to achieve a specific level of tackiness, a heated airflow may be utilized to aid in the moisture removal. However, if a first coating material 120, such as chocolate, may melt with the application of heat then a non-heated air may be utilized.

After expiration of the selected time period, one or more layers of the second coating material 130 including the natural plant based particulate is applied over the first coating material 120. For example, if the second coating material 130 is a fruit, such as a freeze-dried and ground up fruit for example, and the first coating material 120 is a syrup, the fruit powder is applied only after the syrup surrounding the confectionery core 110 has partially dried or crystallized. Accordingly, there is a predetermined wait time, also referred to herein as a selected time period, between application of the first coating material 120 and application of the second coating material 130.

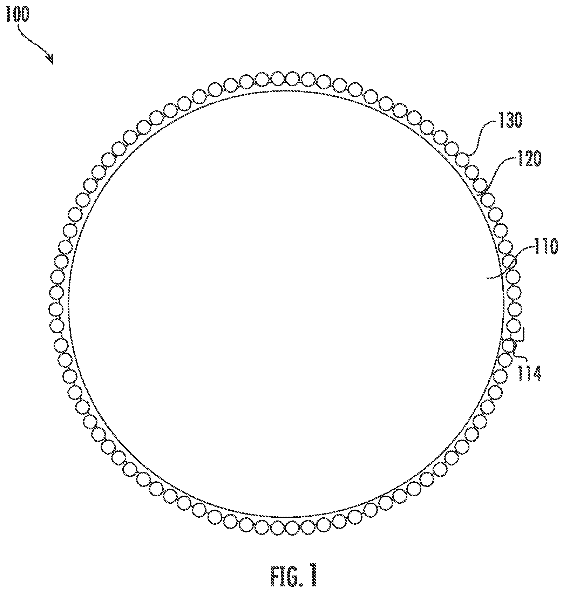

To build up the thickness of the coating 114, application of the first coating material 120 and the second coating material 130 are repeatedly alternated as few or as many times as needed to build the desired coating 114 thickness. Further, by alternating the application of the first coating material 120 and the second coating material 130, the second coating material 130 is evenly distributed over the confectionery core 110. It is understood that while FIG. 1 only shows a single layer of the first coating material 120 and the second coating material 130 for simplicity, multiple layers of the first coating material 120 and the second coating material 130 may be present and these multiple layers may be intermingled or mixed with each other. In an embodiment, the multiple layers of the first coating material 120 and the second coating material 130 may be intermingled by applying as few or as many alternating applications of the first coating material 120 and the second coating material 130 as needed.

A drum 210 suitable for applying one or more of the first coating material 120 and the second coating material 130 to the confectionery core 110 is illustrated in FIG. 2 in accordance with an embodiment of the present disclosure. It is understood that while a single drum 210 is utilized and described herein for clarity of illustration, any number of drums may be utilized. It is further understood that while both the first coating material 120 and the second coating material 130 are applied in the same drum 210, the first coating material 120 and the second coating material 130 may be applied in multiple different drums or outside of any drums.

The drum 210 at least partially encloses an interior volume 220. The drum 210 may be configured to rotate around a central drum axis 250. The confectionery core 110 is loaded into the interior volume 220 of the drum 210 and then the first coating material 120 and the second coating material 130 is fed into the interior volume 220 of the drum 210.

The drum 210 may include a nozzle 230 to feed the first coating material 120 into the interior volume 220 of the drum 210, as shown in FIG. 2. The nozzle 230 may extend to deliver the first coating material 120 into the interior volume 220 of the drum 210 via an inlet opening 212 of the drum 210 (at a tapered front portion thereof).

A flow chart of a method 300 of coating a confectionery core 110 with a second coating material 130 is illustrated in FIG. 3, in accordance with an embodiment of the disclosure. The method 300 may be repeated as few or as many times as needed to build the desired coating 114 thickness.

At block 304, a first coating material 120 is applied to the confectionery core 110. The method 300 may further include, prior to block 304, feeding the confectionery core 110 into a drum 210 and supplying the first coating material 120 to the drum 210. The first coating material 120 may be fed into the interior volume 220 via at least one nozzle 230, as shown in FIG. 2, or any other method known to one of skill in the art. The nozzle 230 may feed the first coating material 120 into the interior volume 220 via at least one of a dripping, drizzling, or spraying of the first coating material 120 from at least one dispensing point disposed from an end and/or body (with openings defined along the body) of the nozzle 230. It is understood that while a nozzle 230 is utilized for explanation, a nozzle 230 is not required and the first coating material 120 may be fed into the interior volume 220 by any other method known to one of skill in the art. It is also understood that while the first coating material 120 is applied to the confectionery core 110 within the drum 210 for explanation, the first coating material 120 may be applied to the confectionery core 110 outside of the drum 210 or by any other method known to one of skill in the art. The first coating material 120 may be heated prior to being fed into the drum 210 so that the first coating material 120 is in a liquid form when entering into the interior volume 220.

The method 300 may further include rotating the drum 210 about a central drum axis 250 to aid in applying the first coating material 120 to the confectionery core 110 by evenly distributing the first coating material 120 around the confectionery core 110. As the drum 210 rotates about the central drum axis 250, the first coating material 120 coats the confectionery core 110 about a surface thereof.

At block 306, the first coating material 120 undergoes a process referred to herein as tackifying on the confectionery core 110 for a selected period of time to achieve a specific level of tackiness of the first coating material 120. The tackifying may occur within the drum 210 or outside of the drum 210, such as, for example on a sheet or a conveyor belt. The specific level of tackiness correlates with a desired surface coverage percentage of the second coating material 130 relative to a surface area of the confectionery core 110. Tackifying the first coating material 120 may include partially drying the first coating material 120 for all or at least a portion of the selected period of time to achieve the specific level of tackiness for the first coating material 120. The first coating material 120 may be partially dried by applying a heated airflow to the first coating material 120 on the confectionery core 110. Alternatively, or in addition, tackifying the first coating material 120 may include partially cooling the first coating material 120 for all or at least a portion of a selected period of time to achieve the specific level of tackiness for the first coating material 120. The first coating material 120 may be partially cooled by applying a non-heated airflow to the first coating material 120 on the confectionery core 110.

Tackifying the first coating material 120 may include allowing the first coating material 120 to crystallize for all or at least a portion of the selected period of time to achieve the specific level of tackiness for the first coating material 120.

At the expiration of the selected time period, as shown in block 308, the second coating material 130 is applied to the exterior of the first coating material 120 arranged about the confectionery core 110. By applying the second coating material 130 only after the selected period of time, such as that the first coating material 120 has achieved the specific level of tackiness, the second coating material 130 adhere to the tacky first coating material 120 to produce the coated confectionery product 100. In an embodiment, the second coating material 130 overlaps the first coating material 120. In an embodiment, the second coating material 130 is a natural plant based particulate, which is at least one of a fruit, a fruit powder, nuts, coffee, vegetable powder, spice particulates, or herb particulates.

At the completion of the method 300, the first coating material 120 should no longer be tacky such that the confectionery cores 110 coated with the first coating material 120 and the second coating material 130 will no longer stick to each other. In other words, the confectionery cores 110 coated with the first coating material 120 and the second coating material 130 are free flowing. Thus, after block 308, the method 300 may include allowing the first coating material 120 to become not tacky after application of the second coating material 130 to the first coating material 120 on the confectionery core 110. The first coating material 120 may be allowed to become not tacky by fully drying the first coating material 120, fully crystallizing the first coating material, and/or allowing the confectionery cores 110 coated with the first coating material 120 and the second coating material 130 to tumble within a drum 210 until the confectionery cores 110 coated with the first coating material 120 and the second coating material 130 no longer stick to each other.

Following completion of block 308, the method 300 may be repeated as few or as many times as needed to build the desired coating 114 thickness. If the method 300 is to be repeated, then prior to repeating the method 300 and adding additional layers of the first coating material 120 and the second coating material 130 the first coating material 120 may be required to be either partially tacky still or no longer tacky at all.

The method 300 includes applying a second layer of the first coating material 120 to the coated confectionery product 100. In an embodiment, the second layer of the first coating material 120 is applied over the second coating material 130. However, embodiments where the first coating material 120 is repeatedly applied to the confectionery core 110 prior to application of the second coating material 130 are also contemplated herein. The second layer of the first coating material 120 may be allowed to become tacky for a second selected period of time to achieve a second specific level of tackiness associated with the second layer of the first coating material 120. The second selected period of time may be equivalent to, or alternatively may be different than, the first selected period of time. The second specific level of tackiness may be equivalent to, or alternatively may be different than, the first specific level of tackiness. Next, a second layer of the second coating material 130 is applied to the second layer of the first coating material 120 on the confectionery core 110. The second layer of the first coating material 120 adheres the second layer of the second coating material 130 to the coated confectionery product 100.

This written description uses examples to disclose the invention, including the best mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

All ranges disclosed herein are inclusive of the endpoints, and the endpoints are independently combinable with each other. Each range disclosed herein constitutes a disclosure of any point or sub-range lying within the disclosed range.

The use of the terms "a" and "an" and "the" and similar referents in the context of describing the invention (especially in the context of the following claims) are to be construed to cover both the singular and the plural, unless otherwise indicated herein or clearly contradicted by context. Further, it should further be noted that the terms "first," "second," and the like herein do not denote any order, quantity, or importance, but rather are used to distinguish one element from another. The modifier "about" used in connection with a quantity is inclusive of the stated value and has the meaning dictated by the context (e.g., it includes the degree of error associated with measurement of the particular quantity).

## Claims

1. A method of coating a confectionery core, the method comprising:
forming the confectionery core from a suitable confectionery composition including an edible product comprising a sweet component, a savoury component, a salty component, a sour component, a bitter component, or a combination thereof;
applying a first coating material to the confectionery core, the first coating material being in liquid form is a syrup;
tackifying said first coating material on the confectionery core for a selected period of time to achieve a specific level of tackiness for said first coating material; and
applying a second coating material to said first coating material on the confectionery core, said second coating material including a natural plant based particulate, wherein said specific level of tackiness correlates with a desired surface coverage percentage of said second coating material relative to a surface area of the confectionery core, wherein said first coating material adheres said second coating material to said confectionery core to produce a coated confectionery product, and wherein the method further comprises:
applying a second layer of said first coating material to said coated confectionery product;
tackifying said second layer of said first coating material on said coated confectionery product for a second selected period of time to achieve a second specific level of tackiness for said second layer of said first coating material; and
applying a second layer of said second coating material to said second layer of said first coating material on said coated confectionery product, said second layer of said first coating material adheres said second layer of the second coating material to said coated confectionery product.

2. The method of claim 1, wherein said tackifying said first coating material for said selected period of time to achieve said specific level of tackiness for said first coating material further comprises:
partially drying said first coating material for all or at least a portion of said selected period of time to achieve said specific level of tackiness for said first coating material.

3. The method of claim 2, further comprising:
applying a heated airflow to said first coating material on the confectionery core to partially dry said first coating material on the confectionery core.

4. The method of claim 1, wherein said tackifying said first coating material for said selected period of time to achieve said specific level of tackiness for said first coating material further comprises:
partially cooling said first coating material for all or at least a portion of said selected period of time to achieve said specific level of tackiness for said first coating material.

5. The method of claim 4, further comprising:
applying a non-heated airflow to said first coating material on the confectionery core to partially cool said first coating material on the confectionery core.

6. The method of claim 1, wherein said tackifying said first coating material for said selected period of time to achieve said specific level of tackiness for said first coating material further comprises:
allowing said first coating material to crystallize for all or at least a portion of said selected period of time to achieve said specific level of tackiness for said first coating material.

7. The method of claim 1, wherein said natural plant based particulate is at least one of a fruit, a fruit powder, nuts, coffee, vegetable powder, spice particulates, or herb particulates.

8. The method of claim 1, wherein said first coating material comprises at least one of a natural syrup with naturally occurring sugar, an artificial syrup, naturally occurring sugar, an artificial sugar, a sugar alcohol, water, a fat based material, chocolate, or a compound chocolate.

9. The method of claim 1, wherein said confectionery core is a chewing gum, a nut, a cluster of nuts, a grain, a cluster of grains, a seed, or a cluster of seeds.

10. The method of claim 1, further comprising:
feeding the confectionery core into a drum, wherein said first coating material is applied to the confectionery core in said drum.

11. The method of claim 10, further comprising:
rotating said drum about a central drum axis to aid in applying said first coating material to the confectionery core by evenly distributing said first coating material around the confectionery core.

12. The method of claim 10, further comprising:
rotating said drum about a central drum axis to aid in tackifying said first coating material.

13. The method of claim 1, wherein said second coating material overlaps said first coating material.

14. The method of claim 1, wherein said desired surface coverage percentage is greater than 50% of said surface area of the confectionery core.

## Patentansprüche

1. Verfahren zum Überziehen eines Süßwarenkerns, das Verfahren umfassend:
Ausbilden des Süßwarenkerns aus einer geeigneten Süßwarenzusammensetzung, einschließlich eines essbaren Produkts, umfassend eine süße Komponente, eine pikante Komponente, eine salzige Komponente, eine saure Komponente, eine bittere Komponente oder eine Kombination davon;
Aufbringen eines ersten Überzugsmaterials auf den Süßwarenkern, wobei das erste Überzugsmaterial, das in flüssiger Form vorliegt, ein Sirup ist;
Klebrigmachen des ersten Überzugsmaterials auf dem Süßwarenkern für einen ausgewählten Zeitraum, um einen bestimmten Grad von Klebrigkeit für das erste Überzugsmaterial zu erreichen; und
Aufbringen eines zweiten Überzugsmaterials auf das erste Überzugsmaterial auf dem Süßwarenkern, wobei das zweite Überzugsmaterial ein natürliches, pflanzenbasiertes Partikelmaterial einschließt, wobei der bestimmte Grad von Klebrigkeit mit einem gewünschten Oberflächenbedeckungsprozentsatz des zweiten Überzugsmaterials relativ zu einem Oberflächenbereich des Süßwarenkerns korreliert, wobei das erste Überzugsmaterial das zweite Überzugsmaterial an dem Süßwarenkern haften lässt, um ein überzogenes Süßwarenprodukt herzustellen, und wobei das Verfahren ferner umfasst:
Aufbringen einer zweiten Schicht des ersten Überzugsmaterials auf das überzogene Süßwarenprodukt;
Klebrigmachen der zweiten Schicht des ersten Überzugsmaterials auf dem überzogenen Süßwarenprodukt für einen zweiten ausgewählten Zeitraum, um einen zweiten bestimmten Grad von Klebrigkeit für die zweite Schicht des ersten Überzugsmaterials zu erreichen; und
Aufbringen einer zweiten Schicht des zweiten Überzugsmaterials auf die zweite Schicht des ersten Überzugsmaterials auf dem überzogenen Süßwarenprodukt, wobei die zweite Schicht des ersten Überzugsmaterials die zweite Schicht des zweiten Überzugsmaterials an dem überzogenen Süßwarenprodukt haften lässt.

2. Verfahren nach Anspruch 1, wobei das Klebrigmachen des ersten Überzugsmaterials für den ausgewählten Zeitraum, um den bestimmten Grad von Klebrigkeit für das erste Überzugsmaterial zu erreichen, ferner umfasst:
teilweises Trocknen des ersten Überzugsmaterials während des gesamten oder mindestens eines Abschnitts des ausgewählten Zeitraums, um den bestimmten Grad von Klebrigkeit für das erste Überzugsmaterial zu erreichen.

3. Verfahren nach Anspruch 2, ferner umfassend:
Aufbringen eines erhitzten Luftstroms auf das erste Überzugsmaterial auf dem Süßwarenkern, um das erste Überzugsmaterial auf dem Süßwarenkern teilweise zu trocknen.

4. Verfahren nach Anspruch 1, wobei das Klebrigmachen des ersten Überzugsmaterials für den ausgewählten Zeitraum, um den bestimmten Grad von Klebrigkeit für das erste Überzugsmaterial zu erreichen, ferner umfasst:
teilweises Abkühlen des ersten Überzugsmaterials während des gesamten oder mindestens eines Abschnitts des ausgewählten Zeitraums, um den bestimmten Grad von Klebrigkeit für das erste Überzugsmaterial zu erreichen.

5. Verfahren nach Anspruch 4, ferner umfassend:
Aufbringen eines nicht erhitzten Luftstroms auf das erste Überzugsmaterial auf dem Süßwarenkern, um das erste Überzugsmaterial auf dem Süßwarenkern teilweise abzukühlen.

6. Verfahren nach Anspruch 1, wobei das Klebrigmachen des ersten Überzugsmaterials für den ausgewählten Zeitraum, um den bestimmten Grad von Klebrigkeit für das erste Überzugsmaterial zu erreichen, ferner umfasst:
Kristallisierenlassen des ersten Überzugsmaterials während des gesamten oder mindestens eines Abschnitts des ausgewählten Zeitraums, um den bestimmten Grad von Klebrigkeit für das erste Überzugsmaterial zu erreichen.

7. Verfahren nach Anspruch 1, wobei das natürliche, pflanzenbasierte Partikelmaterial mindestens eines von einer Frucht, einem Fruchtpulver, Nüssen, Kaffee, Gemüsepulver, Gewürzpartikelmaterial oder Kräuterpartikelmaterial ist.

8. Verfahren nach Anspruch 1, wobei das erste Überzugsmaterial mindestens eines umfasst von einem natürlichen Sirup mit natürlich vorkommendem Zucker, einem künstlichen Sirup, natürlich vorkommendem Zucker, einem künstlichen Zucker, einem Zuckeralkohol, Wasser, einem fettbasierten Material, Schokolade oder einer Schokoladenzusammensetzung.

9. Verfahren nach Anspruch 1, wobei der Süßwarenkern ein Kaugummi, eine Nuss, ein Nusshäufchen, ein Korn, ein Körnerhäufchen, ein Samen oder ein Samenhäufchen ist.

10. Verfahren nach Anspruch 1, ferner umfassend:
Einführen des Süßwarenkerns in eine Trommel, wobei das erste Überzugsmaterial in der Trommel auf den Süßwarenkern aufgebracht wird.

11. Verfahren nach Anspruch 10, ferner umfassend:
Drehen der Trommel um eine zentrale Trommelachse, um das Aufbringen des ersten Überzugsmaterials auf den Süßwarenkern zu unterstützen, durch ein gleichmäßiges Verteilen des ersten Überzugsmaterials um den Süßwarenkern herum.

12. Verfahren nach Anspruch 10, ferner umfassend:
Drehen der Trommel um eine zentrale Trommelachse, um das Klebrigmachen des ersten Überzugsmaterials zu unterstützen.

13. Verfahren nach Anspruch 1, wobei das zweite Überzugsmaterial das erste Überzugsmaterial überlappt.

14. Verfahren nach Anspruch 1, wobei der gewünschte Oberflächenbedeckungsprozentsatz größer als 50 % des Oberflächenbereichs des Süßwarenkerns ist.

## Revendications

1. Procédé d'enrobage d'un noyau de confiserie, le procédé comprenant :
la formation du noyau de confiserie à partir d'une composition de confiserie appropriée comportant un produit comestible comprenant un composant sucré, un composant assaisonné, un composant salé, un composant acide, un composant amer, ou une combinaison de ceux-ci ;
l'application d'un premier matériau d'enrobage au noyau de confiserie, le premier matériau d'enrobage étant sous forme liquide est un sirop ;
le fait de rendre collant ledit premier matériau d'enrobage sur le noyau de confiserie pendant un laps de temps choisi pour atteindre un niveau spécifique de pouvoir collant pour ledit premier matériau d'enrobage ; et
l'application d'un second matériau d'enrobage sur ledit premier matériau d'enrobage sur le noyau de confiserie, ledit second matériau d'enrobage comportant une particule naturelle à base de plantes, dans lequel ledit niveau spécifique de pouvoir collant est en corrélation avec un pourcentage de couverture de surface souhaité dudit second matériau d'enrobage par rapport à une superficie du noyau de confiserie, dans lequel ledit premier matériau d'enrobage fait adhérer ledit second matériau d'enrobage audit noyau de confiserie pour produire un produit de confiserie enrobé, et dans lequel le procédé comprend en outre :
l'application d'une seconde couche dudit premier matériau d'enrobage sur ledit produit de confiserie enrobé ;
le fait de rendre collante ladite seconde couche dudit premier matériau d'enrobage sur ledit produit de confiserie enrobé pendant un second laps de temps choisi pour atteindre un second niveau spécifique de pouvoir collant de ladite seconde couche dudit premier matériau d'enrobage ; et
l'application d'une seconde couche dudit second matériau d'enrobage à ladite seconde couche dudit premier matériau d'enrobage sur ledit produit de confiserie enrobé, ladite seconde couche dudit premier matériau d'enrobage fait adhérer ladite seconde couche du second matériau d'enrobage audit produit de confiserie enrobé.

2. Procédé selon la revendication 1, dans lequel ledit fait de rendre collant ledit premier matériau d'enrobage pendant ledit laps de temps choisi pour atteindre ledit niveau spécifique de pouvoir collant dudit premier matériau d'enrobage comprend en outre :
le séchage partiel dudit premier matériau d'enrobage pendant la totalité ou au moins une partie dudit laps de temps choisi afin d'atteindre ledit niveau spécifique de pouvoir collant pour ledit premier matériau d'enrobage.

3. Procédé selon la revendication 2, comprenant en outre :
l'application d'un flux d'air chauffé audit premier matériau d'enrobage sur le noyau de confiserie pour sécher partiellement ledit premier matériau d'enrobage sur le noyau de confiserie.

4. Procédé selon la revendication 1, dans lequel ledit fait de rendre collant ledit premier matériau d'enrobage pendant ledit laps de temps choisi pour atteindre ledit niveau spécifique de pouvoir collant dudit premier matériau d'enrobage comprend en outre :
le refroidissement partiel dudit premier matériau d'enrobage pendant la totalité ou au moins une partie dudit laps de temps choisi afin d'atteindre ledit niveau spécifique de pouvoir collant pour ledit premier matériau d'enrobage.

5. Procédé selon la revendication 4, comprenant en outre :
l'application d'un flux d'air non chauffé audit premier matériau d'enrobage sur le noyau de confiserie pour refroidir partiellement ledit premier matériau d'enrobage sur le noyau de confiserie.

6. Procédé selon la revendication 1, dans lequel ledit fait de rendre collant ledit premier matériau d'enrobage pendant ledit laps de temps choisi pour atteindre ledit niveau spécifique de pouvoir collant dudit premier matériau d'enrobage comprend en outre :
le fait de permettre audit premier matériau d'enrobage de cristalliser pendant la totalité ou au moins une partie dudit laps de temps choisi pour atteindre ledit niveau spécifique de pouvoir collant pour ledit premier matériau d'enrobage.

7. Procédé selon la revendication 1, dans lequel ladite particule naturelle à base de plantes est au moins l'un parmi un fruit, une poudre de fruit, des fruits à coque, du café, de la poudre de légumes, des particules d'épices ou des particules d'herbes.

8. Procédé selon la revendication 1, dans lequel le premier matériau d'enrobage comprend au moins l'un parmi un sirop naturel avec du sucre présent à l'état naturel, un sirop artificiel, du sucre présent à l'état naturel, du sucre artificiel, un alcool de sucre, de l'eau, un matériau à base de graisse, du chocolat ou un chocolat composé.

9. Procédé selon la revendication 1, dans lequel ledit noyau de confiserie est une gomme à mâcher, un fruit à coque, une grappe de fruits à coque, une céréale, une grappe de céréales, une graine ou une grappe de graines.

10. Procédé selon la revendication 1, comprenant en outre :
l'introduction du noyau de confiserie dans un tambour, dans lequel ledit premier matériau d'enrobage est appliqué sur le noyau de confiserie dans ledit tambour.

11. Procédé selon la revendication 10, comprenant en outre :
la rotation dudit tambour autour d'un axe de tambour central pour aider à l'application dudit premier matériau d'enrobage sur le noyau de confiserie en répartissant uniformément ledit premier matériau d'enrobage autour du noyau de confiserie.

12. Procédé selon la revendication 10, comprenant en outre :
la rotation dudit tambour autour d'un axe de tambour central pour aider au fait de rendre collant ledit premier matériau d'enrobage.

13. Procédé selon la revendication 1, dans lequel ledit second matériau d'enrobage chevauche ledit premier matériau d'enrobage.

14. Procédé selon la revendication 1, dans lequel ledit pourcentage de couverture de surface souhaité est supérieur à 50 % de ladite superficie du noyau de confiserie.
